# EUROPÄISCHE PATENTANMELDUNG

(11) **EP 1 834 978 A1**
(43) Veröffentlichungstag der Anmeldung: **19.09.2007**
(21) Anmeldenummer: 07103908.5
(22) Anmeldetag: 12.03.2007
(51) Int. Cl.: C08J 3/12

(54) **Verfahren zur Mikronisierung von Polymeren**

(30) Priorität: 14.03.2006 EP 06111089
(71) Anmelder: BASF AKTIENGESELLSCHAFT, 67056 Ludwigshafen (DE)
(72) Erfinder: Rylander, Jessica, 67063, Ludwigshafen (DE); Loth, Wolfgang, 67098, Bad Dürkheim (DE); Schönherr, Michael, 67227, Frankenthal (DE); Joch, Andreas, 48163, Münster (DE); Arenz, Stefan, 49090, Osnabrück (DE)
(74) Vertreter: Isenbruck, Günter

(57) **Zusammenfassung**

Vorgeschlagen wird ein Verfahren zur Mikronisierung von Polymeren, mit den folgenden Verfahrensschritten:
a) Bereitstellen einer Lösung oder einer Schmelze des Polymers,
b) Erhöhung des Druckes der Lösung oder Schmelze des Polymers auf einen Wert, der höher ist als der Dampfdruck eines im nachfolgenden Verfahrensschritt zuzugebenden Fluids bei der Temperatur der Lösung oder Schmelze des Polymers,
c) Zugabe und Einmischen eines Fluids unter Erhalt einer Lösung des Fluids in der Lösung oder Schmelze des Polymers oder einer flüssigen Mischung des Fluids mit der Lösung oder Schmelze des Polymers,
d) Zuführung der in Stufe c) erzeugten Lösung oder flüssigen Mischung zu einer Entspannungsvorrichtung, in der das Polymer und das Fluid aufgetrennt werden, wobei
- das Polymer in einen festen, partikelförmigen Zustand und
- das Fluid in einen gasförmigen Zustand übergeht und

e) Einleiten der in Verfahrensstufe d) erhaltenen Mischung aus festem, partikelförmigem Polymer und gasförmigem Fluid in ein Verweilzeitgefäß, zur Fortsetzung und Vollendung der Partikelbildung durch Erstarren und Auftrennung des festen partikelförmigen Polymers und des gasförmigen Fluids, das dadurch gekennzeichnet ist, dass
alle Verfahrensschritte a) bis e) kontinuierlich durchgeführt werden, wobei die Verweilzeit in den Stufen a) bis d) kleiner als 15 Minuten ist.

## Beschreibung

Die Erfindung betrifft ein Verfahren zur Mikronisierung von Polymeren.

In vielen technischen Anwendungen werden Partikel von kleinem Durchmesser, im Mikrometerbereich bei möglichst einheitlicher Partikelgrößenverteilung benötigt. Anwendungsbeispiele sind Adsorbentien mit hoher spezifischer Oberfläche, Trägermaterialien für die Chromatographie, lonenaustauscherharze, Inhaltsstoffe für Pharmazeutika, Kosmetika und für die Nahrungsmittelindustrie, fotografische Substanzen, Farbstoffe, Lackpartikel sowie Sprengstoffe. Weitere Anwendungen sind Systeme zur kontrollierten Wirstofffreisetzung ("controlled release"), bei denen z.B. ein pharmazeutischer Wirkstoff in eine abbaubare Polymermatrix eingebunden ist. Nach der Injektion eines Depots solcher Mikropartikel findet eine langsame und kontrollierte Freisetzung aus der Polymermatrix statt.

Entsprechende Verfahren zur Herstellung derselben werden als Mikronisierung von Polymeren bezeichnet. Bei konventioneller Kristallisation oder Mahlung kann dabei unerwünschte thermische Beanspruchung auftreten und es resultieren breite Partikelgrößenverteilungen mit einem erheblichen und unbrauchbaren Feinanteil. Mahlen ist für einige viskoelastische oder hochviskose Stoffe nicht möglich. Zur Herstellung solcher Partikel eignen sich insbesondere die "Sprühtrocknungsverfahren" (Solution Enhanced Dispersion of Solids (SEDS), Particle Generation from Gas Saturated Solution (PGSS), Rapid Expansion from Supercritical Solution (RESS), (vgl. B. Bungert et al.: "Innovative Verfahren mit komprimierten Gasen" in Chem. Ing. Tech. 69 (1997) 3, Seiten 298 bis 311).

Bei diesen Verfahren wird das Produkt typischerweise in einem Kessel diskontinuierlich aufgeschmolzen, mit einem Dispergiermittel (Gas) versetzt und durch eine Düse entspannt. Dabei wird das Produkt bei Aufheizen thermisch über einen langen Zeitraum beansprucht, was zu Qualitätsverlusten führt.

Es war Aufgabe der Erfindung, die bekannten Verfahren zur Mikronisierung von Polymeren dahingehend zu verbessern, dass auch thermolabile Polymere bearbeitet werden können, unter Erhalt von mikronisierten Polymerpartikeln mit gegenüber bekannten Verfahren noch engerer Partikelgrößenverteilung sowie mit für den konkreten Anwendungsfall geeignete Partikelform, insbesondere Kugelform.

Die Aufgabe wird durch ein Verfahren zur Mikronisierung von Polymeren, mit den folgenden Verfahrensstufen gelöst:
a) Bereitstellen einer Lösung oder einer Schmelze des Polymers,
b) Erhöhung des Druckes der Lösung oder Schmelze des Polymers auf einen Wert, der höher ist als der Dampfdruck eines im nachfolgenden Verfahrensschritt zuzugebenden Fluids bei der Temperatur der Lösung oder Schmelze des Polymers,
c) Zugabe und Einmischen eines Fluids unter Erhalt einer Lösung des Fluids in der Lösung oder Schmelze des Polymers oder einer flüssigen Mischung des Fluids mit der Lösung oder Schmelze des Polymers,
d) Zuführung der in Stufe c) erzeugten Lösung oder flüssigen Mischung zu einer Entspannungsvorrichtung, in der das Polymer und das Fluid aufgetrennt werden, wobei
   - das Polymer in einen festen, partikelförmigen Zustand und
   - das Fluid in einen gasförmigen Zustand übergeht und
e) Einleiten der in Verfahrensstufe d) erhaltenen Mischung aus festem, partikelförmigem Polymer und gasförmigem Fluid in ein Verweilzeitgefäß, zur Fortsetzung und Vollendung der Partikelbildung durch Erstarren und Auftrennung des festen partikelförmigen Polymers und des gasförmigen Fluids, dadurch gekennzeichnet, dass
alle Verfahrensschritte a) bis e) kontinuierlich durchgeführt werden, wobei die Verweilzeit in der Summe der Verfahrensstufen a) bis d) kleiner als 15 Minuten ist.

Bevorzugt ist die Verweilzeit in der Summe der Verfahrensstufen a) bis d) kleiner als 10 Minuten, oder auch kleiner als 5 Minuten.

Es wurde gefunden, dass für ein Verfahren zur Mikronisierung von Polymeren mit den in oben definierten Verfahrensschritten ein kontinuierlicher Betrieb mit begrenzter Verweilzeit in den Verfahrensschritten a) bis d) möglich ist, und dabei mikronisierte Polymerpartikel mit gegenüber bekannten Verfahren verbesserten Eigenschaften erhalten werden.

In der Verfahrensstufe a) wird ein Polymer, wobei hierunter auch eine Mischung von Polymeren verstanden wird, in Form einer Lösung oder einer Schmelze bereitgestellt. Hierbei kann es sich um das unmittelbare Produkt aus einem Polymerisationsreaktor handeln, oder auch um ein Produkt aus einem Polymerisationsreaktor, das nachfolgenden Aufarbeitungsschritten unterworfen wurde, insbesondere einer Entgasung und/oder einer Additivierung, bevorzugt einer Compoundierung.

Falls das Polymer nicht in Form einer Lösung oder Schmelze, sondern in fester Form, insbesondere als Granulat oder Pulver, vorliegt, muss dasselbe zwecks Bereitstellung in Verfahrensstufe a) zunächst aufgeschmolzen, das heißt auf mindestens 5 bis 10°C über seine Schmelztemperatur erwärmt werden. Das Aufschmelzen erfolgt kontinuierlich bevorzugt in einem Extruder, wobei die Energiezufuhr für das Aufschmelzen überwiegend durch Friktionswärme und in geringem Maß durch Wärmeleitung erfolgt.

Das thermisch und mechanisch schonende Aufschmelzen kann bevorzugt unter Zusatz eines Fluids erfolgen, dass die Glasübergangstemperatur des Polymeren bzw. die Schmelztemperatur der Mischung absenkt.

Zusätzlich kann der Schmelze zur Viskositätsabsenkung derselben, bevorzugt im ersten Extruder, in dem die Schmelze erzeugt wird, oder nach dem ersten Extruder, ein weiteres Fluid zugesetzt werden.

Die Verfahrensstufe b), die Erhöhung des Druckes der Lösung oder Schmelze auf einen Wert der höher ist als der Dampfdruck eines im nachfolgenden Verfahrensschritt zuzugebenden Fluids bei der Temperatur der Lösung oder Schmelze, erfolgt bevorzugt in einer Pumpe oder auch in einem weiteren Extruder.

Dieser weitere Extruder beziehungsweise die Pumpe, insbesondere als Zahnradpumpe ausgeführt, wird benötigt, um ein sicheres Betreiben und Vermeiden von Rückströmung zu gewährleisten.

Der Druckaufbau erfolgt bevorzugt auf einen Wert im Bereich von 10 bis 500 bar absolut, insbesondere auf einen Wert zwischen 10 und 250 bar absolut.

In Verfahrensstufe c) wird ein Fluid zugeführt, das mit der Lösung oder Schmelze des Polymers eine einphasige Lösung oder eine flüssige Mischung bildet. Es kann sich hierbei um eine Substanz oder eine Mischung von Substanzen, insbesondere ausgewählt aus der nachfolgenden Aufzählung handeln:
Kohlendioxid, Stickstoff, Helium, Argon, Distickstoffmonoxid, C₁-C₈-Alkane, Cycloalkane und -Alkene, insbesondere Methan, Ethan, Ethylen, Propan, Propen, Butan, i-Buten, 1-Buten, Pentan, i-Pentan, Cyclopentan, Hexan, Cyclohexan, Heptan, Oktan, C₁-C₈-Alkohole, insbesondere Methanol, Ethanol, Isopropanol, Cyclohexanol, Fluorkohlenwasserstoffe, insbesondere Chlortrifluormethan und Monofluormethan, Benzol, Toluol, Pyridin, o-Xylol, Tetralin, Wasser und wässrige Salzlösungen.

Die Einmischung des Fluids erfolgt bevorzugt über einen statischen Mischer oder ein dynamisches Mischorgan, wie eine Mischpumpe.

Die Fluidmenge, bezogen auf die Menge der Lösung oder Schmelze des Polymers, kann je nach gewünschter Partikelgröße und Morphologie des Produktes, insbesondere im Bereich zwischen 0,05 : 1 bis 20 : 1 variiert werden.

Das Fluid setzt die Viskosität des im nächsten Verfahrensschritt zu versprühenden Mediums drastisch herab und kann den erforderlichen Drucksprung über die Entspannungsvorrichtung und damit den gesamten Prozessdruck deutlich verringern.

Durch die gezielte Auswahl und Variation von zuzugebenden Fluiden können die Produkteigenschaften unter ansonsten gleichen Verfahrensbedingungen gezielt beeinflusst werden.

In Verfahrensstufe d) wird die zuvor erzeugte Lösung oder flüssige Mischung aus Polymer und Fluid einer Entspannungsvorrichtung zugeführt, in der das Polymer und das Fluid aufgetrennt werden, wobei das Polymer in einen festen, partikelförmigem Zustand und das Fluid in einen gasförmigen Zustand übergeht. Als Entspannungsvorrichtung werden insbesondere Düsen eingesetzt, die bevorzugt einen Drucksprung im Bereich von 10 bar bis mehreren 100 bar realisieren können. Hierbei kommen insbesondere Einstoff- oder Druckdüsen zum Einsatz, wie sie beispielsweise in Lefebre, Atomization and Sprays, Hemisphere Publishing Corp. 1989, ISBN 0-89116-603-3, pp. 106 bis 127, beschrieben sind.

Die Bauformen der Düsen unterscheiden sich im Wesentlichen durch Einbauten im Innern derselben, beispielsweise Drallkörper oder Drallkammern. Hierbei kann es sich insbesondere um Vollkegel-, Hohlkegeldüsen und Düsen in Sonderbauarten handeln. Vollkegeldüsen führen durch eine Strahlströmung beim Austritt der Flüssigkeit aus der Düse zur Ausbildung einer Flüssigkeitslamelle, die dann in besonders gleichmäßig große Tröpfchen zerfällt, im Vergleich zum unkontrollierten Zerfall bei der Vollkegeldüse.

Von den Sonderbauarten sind insbesondere Hybriddüsen bevorzugt, die die Zerstäubung durch ein hierbei expandierendes Gas unterstützen.

Besonderes Augenmerk ist auf die Beheizung der Düse zu richten: Vorteilhaft können geeignete Schutzheizungen vorgesehen sein, die vermeiden, dass die Schmelze durch Abkühlen die Düse verstopft.

Als vorteilhaft hat sich auch die Schaffung eines Mikroklimas im unmittelbaren Zerstäubungsbereich der Düse, das heißt im Bereich von wenigen cm um den Düsenaustritt, erwiesen.

Darunter wird die gezielte Einstellung von Temperatur, Feuchtigkeit und Strömungsgeschwindigkeit des umgebenden Gases im Abstand von wenigen cm um die Düse verstanden. Dadurch wird die Zustandsänderung während des Zerfalls kontrolliert, in einem Bereich am Düsenaustritt, wo die Wärme- und Stoffübergangskoeffizienten extrem hoch sind und der Wärme- und Stofftransport somit sehr intensiv ist. Dadurch können beispielsweise die Bildung von Fäden und unrunden Partikeln durch zu schnelle Abkühlung der Schmelze verhindert werden.

In Verfahrensstufe e) wird die in Verfahrensstufe d) erhaltene Mischung aus sich verfestigendem, partikelförmigem Polymer und gasförmigem Fluid in ein Verweilzeitgefäß zur Fortsetzung und Vollendung der Partikelbildung durch Erstarren und Auftrennen des festen partikelförmigen Polymers und des gasförmigen Fluids eingeleitet. Als Verweilzeitgefäß kann vorteilhaft ein Silo, Schacht oder Turm eingesetzt werden.

In das Verweilzeitgefäß kann vorteilhaft eine weitere Einspeisung eines Fluids erfolgen, das dasselbe wie das in Verfahrensstufe c) eingesetzte Fluid oder ein hiervon verschiedenes Fluid sein kann. Die Einspeisung kann in Gleich- oder Gegenstrom zum Hauptstrom aus festem partikelförmigen Polymer und gasförmigem Fluid erfolgen. Dadurch kann das Temperaturprofil im Verweilzeitgefäß und damit der Erstarrungsprozess und in der Folge die Morphologie der resultierenden Polymerpartikel beeinflusst werden.

Dem Verweilzeitgefäß kann ein weiterer Apparat zur Abtrennung der Partikel vom Gasstrom, beispielsweise ein Zyklon, nachgeschaltet sein.

Das in Verfahrensstufe c) und gegebenenfalls in einer der anderen Verfahrensstufen zugegebene Fluid kann aus ökologischen und/oder ökonomischen Gründen zurückgewonnen und in den Mikronisierungsprozess zurückgeführt werden. Hierfür wird das Fluid nach dem Austritt aus dem Verweilzeitgefäß oder gegebenenfalls aus nachgeschalteten Apparaten, beispielsweise Zyklonen, abgefangen und zu einem Vorlagebehälter weitergeleitet. Auf dem Weg dahin oder dahinter kann das Fluid abgekühlt, optional von Staub befreit (gewaschen), komprimiert und kondensiert werden.

Sämtliche im vorliegenden Verfahren eingesetzten Stoffe können sowohl einzeln als auch in Gemischen eingesetzt werden.

Als Polymere können beispielsweise eine oder mehrere der nachfolgend aufgeführten Substanzen eingesetzt werden:

Thermoplaste, bevorzugt Vinylpolymere, insbesondere Polystyrol, Polystyrolacrylnitril, Styrol-Butadien-Copolymere, Acrylsäure-Polymere, Poly-Acrylate, Poly-Methacrylate, weiterhin Polykondensate, wie Polyester, Polyamide, aromatische oder aliphatische thermoplastische Polyurethane, Epoxide, Polyurethane weiterhin auch Polyvinylpyrrolidone, Polysulfone, Polyethersulfone.

Zusätzlich können Prozesshilfsmittel, wie Polycarbonate, Mineralöle oder Silikonöle, eingesetzt werden.

Darüber hinaus können übliche Additive, wie Kreide, Talk, Farbstoffe, Pigmente, Flammschutzmittel, Stabilisatoren, hyperverzweigte Polymere, mikro- und nanopartikuläre organische und anorganische Füllstoffe eingesetzt werden.

Für das erfindungsgemäße Verfahren ist es wesentlich, dass sämtliche Verfahrensstufen kontinuierlich durchgeführt werden und dass die Verweilzeit in den Verfahrensstufen a) bis d) insgesamt kleiner als 5 Minuten, bevorzugt kleiner als 10 Minuten, besonders bevorzugt kleiner als 5 Minuten ist.

Die nach dem erfindungsgemäßen Verfahren erhaltenen mikronisierten Polymere kennzeichnen sich insbesondere durch die folgenden anwendungstechnischen Vorteile:
- Pulver, welche sich schneller und besser redispergieren und lösen lassen,
- Erzeugung stabiler Suspensionen aus redispergierbaren Partikel durch einheitlichere Partikelgröße,
- Pulver, welche eine bessere Fließfähigkeit aufweisen und dadurch zu einfacheren Beschichtungsvorgängen mit besseren Beschichtungsergebnissen führen und besser dosierbar sind,
- Partikelstrukturen, welche besser extrahierbar sind,
- Partikel, welche besser und schneller getrocknet werden können,
- kostengünstigere und effizientere Gestaltung von Trocknungs- und/oder Separationsschritte, dadurch dass das Fluid als Schleppmittel eingesetzt wird.

Die Erfindung wird im Folgenden anhand von Ausführungsbeispielen näher erläutert.

### Ausführungsbeispiel 1

Ein Granulat von Polyethersuolfon (Ultrason E® der BASF AG) wurde mit einem Massenstrom von 15 kg/h in einen Extruder mit insgesamt 8 Zonen ZSK 25 der Firma Werner & Pfleiderer bei 330°C aufgeschmolzen. In die dritte Zone des Extruders wurden ca. 20 kg/h flüssiges Kohlendioxid eingespritzt und in die Polyethersulfon-Schmelze eingearbeitet. Es konnte über die Motorleistung des Extruders nachgewiesen werden, dass die Viskosität der Schmelze dadurch drastisch reduziert wurde. Die Temperatur in den fünf weiteren Zonen des Extruders betrug 250°C. Der Druck am Kopf des Extruders betrug ca. 125 bar.

Dem Extruder war eine Zahnradpumpe nachgeschaltet, worin der Druck des Schmelzestromes aus dem Extruder auf ca. 240 bar erhöht wurde. Mittels einer Membrankolbenpumpe wurden weitere 26 kg/h flüssiges Kohlendioxid in den Schmelzestrom dosiert und mit statischen Mischelementen (D = 50 mm, Länge = 8 D) eingemischt.

Die Mischung wurde über eine Einstoffdüse in einen zylindrischen Fallturm mit 3 m Durchmesser und 6 m Höhe des Zylinders, der sich im unteren Teil konisch verjüngte, bei Umgebungsdruck, versprüht. Im unteren Teil des Konus wurden die erhaltenen Polymerpartikel und gasförmiges Kohlendioxid mit einem Industriestaubsauger abgesaugt. Die Polymerpartikel wurden mit einem Filter im Industriestaubsauger abgefangen.

Die Partikelgrößenverteilung der gesammelten Polymerpartikel wurde durch Laserbeugung mit einem Gerät Malvern Master Sizer® bestimmt und betrug d(0,1) = 54 µm, d(0,5) = 248 µm und d(0,9) = 449 µm.

Das Produkt hatte eine Schüttdichte von 500 g/l und eine spezifische Oberfläche, gemessen mit Stickstoffadsorption nach DIN 66131 von ca. 5,3 m²/g.

Das Verfahren wurde vollkontinuierlich durchgeführt und die Verweilzeiten bis zum Eintritt in den Fallturm (entsprechend den Verfahrensstufen a) bis d) nach der Definition in Anspruch 1) betrugen insgesamt ca. 3 Minuten und 7 Sekunden.

Demgegenüber hatte ein konventionell durch Kryomahlen hergestelltes Polymerpulver ausgehend von demselben Granulat von Polyethersulfon eine geringere Schüttdichte, von 400 g/l, was sich auf eine eckigere Partikelform zurückführen lässt sowie eine deutlich breitere Partikelgrößenverteilung.

### Ausführungsbeispiel 2

15 kg/h Polypropylengranulat wurden in demselben zu Beispiel 1 beschriebenen Extruder mit 8 Zonen bei 170°C aufgeschmolzen.

Ein Blockcopolymer aus Polyisobuten-Bernsteinsäureanhydrid-block-Polyethylenglykol wurde bei 70°C in einem Vorlagebehälter aufgeschmolzen und mittels einer Zahnradpumpe in die dritte Zone des Extruders eingespritzt.

Die resultierende Mischung bestand aus 40 Gew.-% Polypropylen und 60 Gew.-% Polyisobuten-Bersteinsäureanhydrid-Polyethylenglykol-Blockcopolymer und wurde bei 170°C im Extruder vermischt.

Der Druck des Schmelzestroms wurde mittels einer Zahnradpumpe auf ca. 150 bar erhöht und 30 kg/h flüssiges Kohlendioxid wurden mittels einer Membrankolbenpumpe zugegeben.

Die Mischung wurde mit Hilfe von statischen Mischelementen vermischt auf 140°C abgekühlt und anschließend über eine Einstoffdüse in einen zylindrischen Fallturm mit 2 m Durchmesser und 8 m Höhe des Zylinders bei leichtem Unterdruck versprüht. An den zylindrischen Teil des Fallturms schloss sich im unteren Bereich ein sich konisch verjüngender Teil an, über den die Polymerpartikel und gasförmiges Kohlendioxid abgezogen wurden. Die Temperatur des Fallturms wurde mit einem temperierten trockenen Luftstrom, der im oberen Bereich zugeführt wurde, auf 50°C eingestellt.

In einem nachgeschalteten Zyklon wurden die Polymerpartikel von luft- und gasförmigem Kohlendioxid separiert.

Die Produktfraktionen aus dem Fallturm und dem Zyklon wurden vermengt und hatten zusammen eine Partikelgrößenverteilung von d(0,1) = 98 µm, d(0,5) = 269 µm und d(0,9) = 403 µm. Die Partikelgrößenverteilung wurde mit Laserbeugung mit einem Gerät Malvern Master Sizer® bestimmt.

Die Polymerpartikel hatten eine Schüttdichte von 710 g/l und eine spezifische Oberfläche, bestimmt mittels Stickstoffadsorption, bestimmt nach DIN 66131 von 12m²/g.

Die für die anwendungstechnischen Eigenschaften wesentliche Dosierbarkeit wurde über den Böschungswinkel bestimmt; Dieser betrug 27° und wurde nach dem FEM-Standard 2582 bestimmt.

Das Verfahren wurde vollkontinuierlich durchgeführt und die gesamte Verweilzeit bis zum Eintritt in den Fallturm (entsprechend den Verfahrensstufen a) bis d) nach der Definition in Anspruch 1) betrug insgesamt ca. 5 Minuten.

Ein vergleichbares Produkt ist konventionell nicht herstellbar, da bereits die Verstangung und Granulierung an der Klebrigkeit und Wasserlöslichkeit des Produktes scheitern.

### Ausführungsbeispiel 3

10 kg/h einer Lösung aus 85 Gew.-Teilen eines Copolymers aus 98 Gew.-Teilen n-Butylacrylat und 2 Gew.-Teilen eines UV-aktivierbaren Acrylats in tert.-Butanol, mit einer Viskosität von 40 Pas bei 130°C wurden, aus einem Polymerisationskessel kommend, mit einer Zahnradpumpe auf 230 bar komprimiert.

Anschließend wurden 15 kg/h Kohlendioxid eingespritzt und in einem nachfolgenden statischen Mischer (DN 12, L/D = 20) eingemischt und die Lösung auf 220°C temperiert.

Die Verweilzeit zwischen Polymerisationskessel und Düse lag bei 4,5 Minuten.

Die Lösung wurde über eine Vollkegeldüse in einen Turm mit einem Durchmesser von 3 m und einer Höhe von 6 m expandiert. Am auf 5°C temperierten unteren Ende des Turmes wurden Polymerpartikel mit einem mittleren Durchmesser von 280 µm aufgefangen, wobei die Partikelgrößenbestimmung durch Bildauswertung von Mikroskopiebildern erfolgte. Restmonomer und Lösungsmittel wurden Gaschromatographie zu 40 ppm bzw. 90 ppm bestimmt. Die Restaktivität des UV-aktivierbaren Comonomeren betrug 80 % und der Gelgehalt nach Auflösen in tert.-Butanol wurde zu 0,3 % ermittelt.

### Ausführungsbeispiel 3 zum Vergleich

Derselbe Massenstrom derselben Lösung wurde in einem Extruder ZSK25 der Firma Werner & Pfleiderer auf 240°C erhitzt und über zwei Vakuumstutzen am Extruder bei 800 mbar absolut bzw. 50 mbar absolut entgast.

Die gaschromatographische Analyse ergab Werte von 400 ppm für den Restmonomergehalt und 1500 ppm für das Lösungsmittel.

Bei diesem Schritt wurde durch die scharfe Beanspruchung im Extruder, mit einer Verweilzeit von 5 Minuten, die Restaktivität des UV-aktivierbaren Comonomeren bereits auf 65 % reduziert und der Gelgehalt erreichte 1,2 %.

Mit dem obigen erfindungsgemäßen Ausführungsbeispiel 3 vergleichbare Restmonomer- bzw. Lösungsmittelgehalte wurden erst nach einer weiteren Entgasung in einem Dünnschichtverdampfer bei 180°C und 200 mbar absolut und einer Verweilzeit von ca. 5 Minuten erhalten, wobei die Restaktivität des UV-aktivierbaren Comonomeren weiter auf nicht mehr marktfähige 40 % absank und der Gelgehalt auf inakzeptable 2,3 % anstieg.

Der Vergleich verdeutlicht, dass thermolabile Produkte unter Erhalt der produktrelevanten Eigenschaften wie Restmonomer- und Lösungsmittelgehalt kleiner als 500 ppm, Restaktivität des UV-aktivierbaren Comonomeren größer als 70 % und Gelgehalt kleiner als 1 % nach Ausführungsbeispiel 3, wonach die Zeit der thermischen Belastung auf weniger als 5 Minuten beschränkt war, erreicht wurden, nicht jedoch nach dem Ausführungsbeispiel 3 zum Vergleich (nach dem Stand der Technik).

## Patentansprüche

1. Verfahren zur Mikronisierung von Polymeren mit den folgenden Verfahrensstufen:
a) Bereitstellen einer Lösung oder einer Schmelze des Polymers,
b) Erhöhung des Druckes der Lösung oder Schmelze des Polymers auf einen Wert, der höher ist als der Dampfdruck eines im nachfolgenden Verfahrensschritt zuzugebenden Fluids bei der Temperatur der Lösung oder Schmelze des Polymers,
c) Zugabe und Einmischen eines Fluids unter Erhalt einer Lösung des Fluids in der Lösung oder Schmelze des Polymers oder einer flüssigen Mischung des Fluids mit der Lösung oder Schmelze des Polymers,
d) Zuführung der in Stufe c) erzeugten Lösung oder flüssigen Mischung zu einer Entspannungsvorrichtung, in der das Polymer und das Fluid aufgetrennt werden, wobei
- das Polymer in einen festen, partikelförmigen Zustand und
- das Fluid in einen gasförmigen Zustand übergeht und
e) Einleiten der in Verfahrensstufe d) erhaltenen Mischung aus festem, partikelförmigem Polymer und gasförmigem Fluid in ein Verweilzeitgefäß, zur Fortsetzung und Vollendung der Partikelbildung durch Erstarren und Auftrennung des festen partikelförmigen Polymers und des gasförmigen Fluids, **dadurch gekennzeichnet, dass**
alle Verfahrensschritte a) bis e) kontinuierlich durchgeführt werden, wobei die Verweilzeit in der Summe der Verfahrensstufen a) bis d) kleiner als 15 Minuten ist.

2. Verfahren nach Anspruch 1, **dadurch gekennzeichnet, dass** die Verweilzeit in der Summe der Verfahrensstufen a) bis d) kleiner als 10 Minuten ist.

3. Verfahren nach Anspruch 1, **dadurch gekennzeichnet, dass** die Verweilzeit in der Summe der Verfahrensstufen a) bis d) kleiner als 5 Minuten ist.

4. Verfahren nach Anspruch 1 bis 3, **dadurch gekennzeichnet, dass** die in Verfahrensstufe a) bereitgestellte Lösung oder Schmelze das Produkt aus einem Polymerisationsreaktor ist, das unmittelbar oder nach weiteren Ausarbeitungsschritten, insbesondere einer Entgasung oder einer Additivierung, bevorzugt einer Compoundierung, eingesetzt wird.

5. Verfahren nach einem der Ansprüche 1 bis 3, **dadurch gekennzeichnet, dass** die in Verfahrensstufe a) bereitgestellte Lösung oder Schmelze eines Polymers ausgehend von einem Polymer in fester Form, insbesondere in Granulat- oder Pulverform, durch Aufschmelzen desselben, bevorzugt in einem ersten Extruder, erhalten wird.

6. Verfahren nach Anspruch 5, **dadurch gekennzeichnet, dass** das Aufschmelzen des Polymers in fester Form unter Zusatz eines Fluids zur Absenkung der Schmelztemperatur durchgeführt wird.

7. Verfahren nach einem der Ansprüche 4 bis 6, **dadurch gekennzeichnet, dass** der Polymerschmelze ein Fluid zur Absenkung der Viskosität derselben, bevorzugt im oder nach dem ersten Extruder, zugesetzt wird.

8. Verfahren nach einem der Ansprüche 1 bis 7, **dadurch gekennzeichnet, dass** die Verfahrensstufe b) zur Vermeidung von Rückströmen in einer Pumpe oder einem weiteren Extruder durchgeführt wird.

9. Verfahren nach einem der Ansprüche 1 bis 8, **dadurch gekennzeichnet, dass** in Verfahrensstufe b) ein Druck im Bereich von 10 bis 500 bar absolut, bevorzugt von 10 bis 250 bar absolut, aufgebaut wird.

10. Verfahren nach einem der Ansprüche 1 bis 9, **dadurch gekennzeichnet, dass** die Verfahrensstufe c) in einem statischen Mischer durchgeführt wird.
